# EUROPEAN PATENT SPECIFICATION

(11) **EP 2 964 513 B1**
(45) Date of publication and mention of the grant of the patent: **12.06.2019**
(21) Application number: 14760835.0
(22) Date of filing: 05.03.2014
(51) Int. Cl.: B62D 61/12, B60G 17/04, B60G 9/00

(54) **AXLE LIFT FOR A VEHICLE**
HEBEBÜHNE FÜR EIN FAHRZEUG
DISPOSITIF DE LEVAGE D'ESSIEU POUR VÉHICULE

(30) Priority: 07.03.2013 SE 1350275
(43) Date of publication of application: 13.01.2016
(73) Proprietor: VM Trailer AB, 438 92 Härryda (SE)
(72) Inventor: DAHLSJÖ, Richard, S-434 43 Kungsbacka (SE)
(74) Representative: Zacco Sweden AB
(86) International application number: PCT/SE2014/050269
(87) International publication number: WO 2014/137277

(56) References cited:
- EP-A1- 0 114 680
- EP-A1- 0 529 320
- EP-A1- 0 561 366
- GB-A- 2 277 064
- US-A- 3 093 388
- US-A- 3 380 748

## Description

The present invention concerns a device for a wheeled vehicle which comprises an axle lift to allow optional hoisting of pairs of wheels provided with shock absorbers and the appurtenant axle between hoisted position, in which said pairs of wheels are supported in a lifted position freely at a distance from a ground, and a lowered position, in which said pairs of wheels rest against the ground on which the vehicle is intended to be driven.

Known solutions to optionally be able to alternate between single or double pairs of wheels, which are in contact with the ground to, at greater load, be able to lower the axle load on the vehicle, are comprised of large and heavy installations which comprise numerous movable and bulky parts. In addition, they are difficult to mount and are neither suitable to be mounted afterwards on goods vehicle, on which it is desired to install such ones, such as lorries/trucks and trailers.

GB 2277064A comprises a vehicle system which is driven by an external driving source and accordingly not having a closed system.

AU 1368566A as well as US 4,314,709A comprise extra pairs of wheels interconnectable with a rear portion of a vehicle and which are pivotably mounted to be possible to be brought between turned-down driving position and turned-up storage position, respectively. Said actuation takes place by means of a gas hydraulic accumulator (33) and hydraulic cylinders (30) and connecting conduits (32, 36 and 39) and hydraulic cylinders (56), respectively, and air springs (27), respectively, which, however, are not connected with each other.

US 3,380,748 discloses a suspension system for a motor vehicle including a hydraulic spring assembly for each wheel of the vehicle comprising a double-acting hydraulic cylinder mounted adjacent each wheel of the motor vehicle and connected to the wheel mounting assembly at one end and to the motor vehicle body thereabove. Further including at least one cylinder mounted on each of opposed wheels on an axle and being interconnected by a first hydraulic line communicating with the chamber on the cap end of each cylinder and interconnected by a second hydraulic line communicating with the rod end of each cylinder. Further including a first hydraulic accumulator mounted in said first hydraulic line and a second hydraulic accumulator mounted in said second hydraulic line and valve means arranged to close the lines leading to the cap and rod ends of each said hydraulic cylinder, the hydraulic pressure in said cap end being normally substantially higher than the pressure in said rod end for carrying the load of the vehicle on hydraulic springs and to provide by the hydraulic system for said rod ends a hydraulic shock absorber for each cylinder. Including further a pump and valve means arranged to increase and decrease the pressure in either end of each cylinder, with the pressure in the cap ends normally sufficiently greater than the pressure in the rod ends to overcome the weight of the vehicle and its load and the pressure in said rod end and move said vehicle body upwardly.

Therefore, the main object of the present invention is primarily to be able to provide such a device which at least solves a number of the above-mentioned problems and disadvantages.

Said object is achieved by means of a device according to the present invention, which essentially is characterized in that the axle lift is arranged to be driven by a gas accumulator which, via hydraulics, is interconnected with the shock absorbers of said pairs of wheels in a closed system, a suspension device for said pairs of wheels being arranged interconnected with said pairs of wheels and the frame of the vehicle, and being in the form of a fluid suspension which is fillable with fluid and which said suspension device is arranged to reset and recharge the function of the axle lift in inactivated position.

The invention is described in the following as a preferred embodiment example, reference being made to the accompanying drawings, in which
Figs. 1-2 show a wheel axle pair in lowered normal position, wherein
Fig. 1 shows a side view of one wheel having schematically shown wheel lifting arrangement, and
Fig. 2 shows parts included in said arrangement in its normal position with activated vehicle suspension,
Figs. 3-4 show said wheel axle pair in lifted position free from the ground and with shown lifting function, wherein

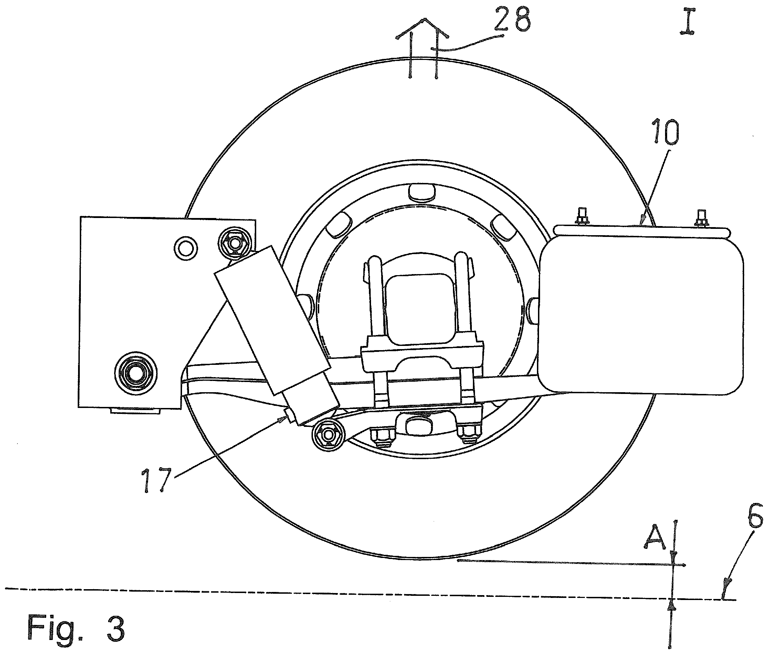

Fig. 3 shows a side view of one wheel with schematically shown wheel lifting arrangement, and

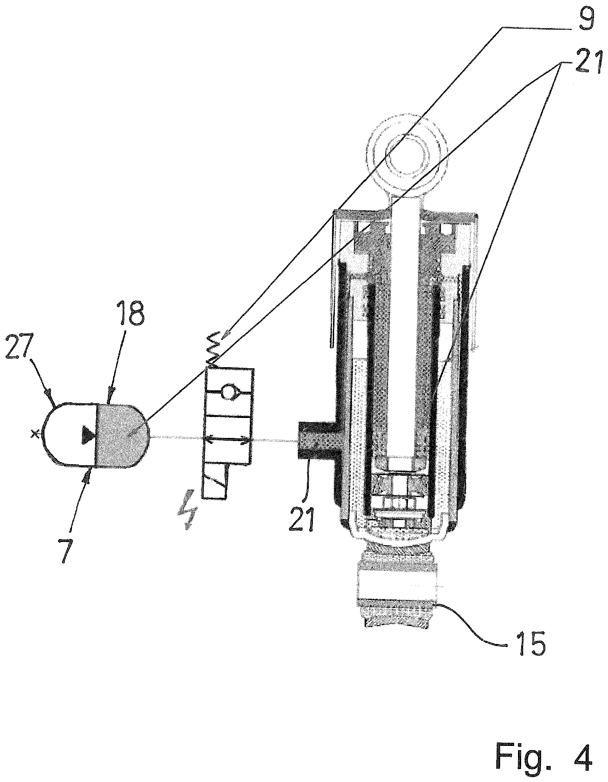

Fig. 4 shows parts included in said arrangement in shown lifting function position with deactivated suspension,

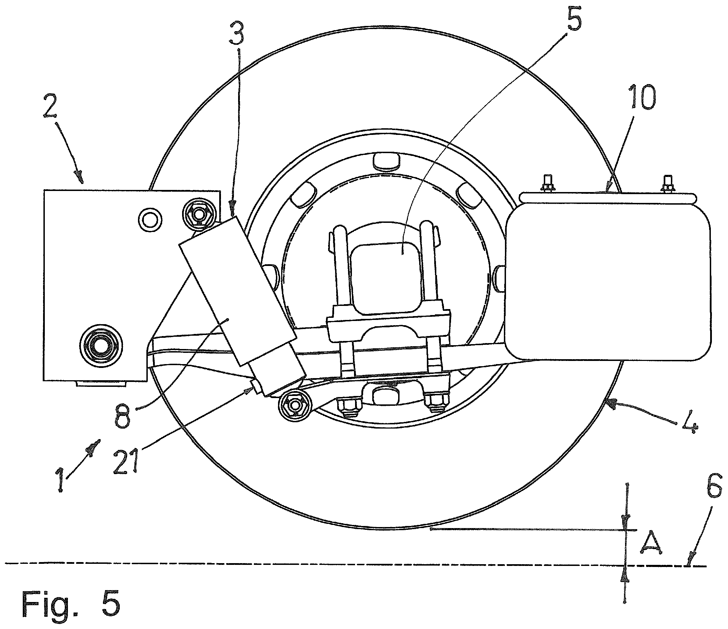

Figs. 5-6 show said wheel axle pair in prepared reset position, wherein
Fig. 5 shows a side view of one wheel in a schematically shown wheel reset position, and

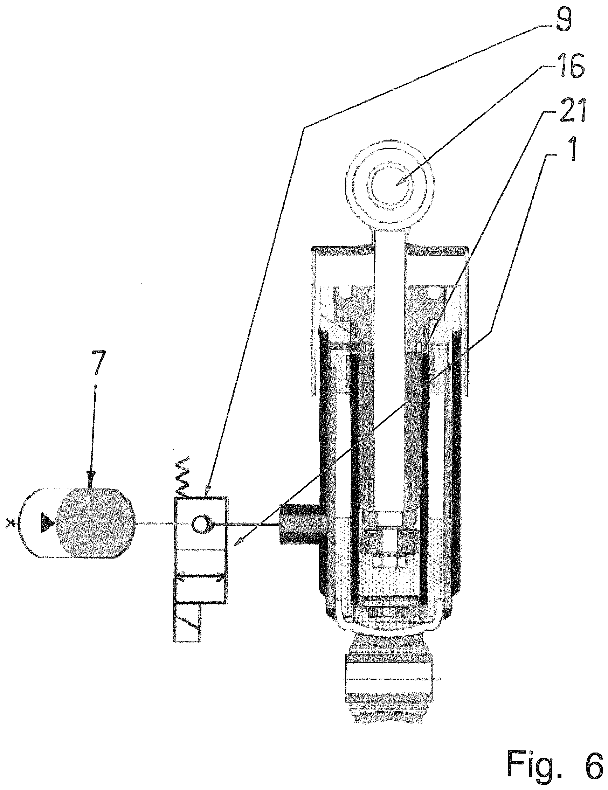

Fig. 6 shows parts included in said arrangement in shown reset position with the vehicle suspension in activated position.

Obtained advantages of the present invention are, among others, the following:
* Allows simple, quick, and efficient mounting on the vehicle.
* Is generally maintenance-free.
* Has low weight.
* Requires small space in the vehicle.
* Has closed hydraulic system.
* Allows simple complementary mounting of lifting device in existing goods vehicle with wheels.
* Has a long service life.
* Has no exposed movable parts.
* Allows simple use.

A device 1 according to the present invention, which is arranged and intended to be applied for a wheeled vehicle 2 which comprises an axle lift 3 to allow optional hoisting of wheels 4 in pairs and the appurtenant axle 5 between a hoisted position I, in which said pairs of wheels 4 are supported in a lifted position freely at a distance A from an intended suitable ground 6, and a lowered position II, in which said pairs of wheels 4 rest against the ground 6 on which the vehicle 2 is intended to be driven, is driven by a gas accumulator 7 in contrast to the previously known device therefor which is driven either by air/mechanically or by electrohydraulic function/supply. More precisely, the present device 1 is constructed so that the axle lift 3 is driven by a said gas accumulator 7, which does not need to be interconnected with any external driving source, and which is recharged by the existing suspension of the vehicle and which, via hydraulics, is interconnected with the shock absorbers 8 of said pairs of wheels 4.

Furthermore, a non-return valve 9 is connected between the gas accumulator 7 and said number of shock absorbers 8.

A spring device 10 for said hoistable pairs of wheels 4 is arranged to be interconnected with said pairs of wheels 4 and the frame 11 of the vehicle and is in the form of a fluid suspension which is fillable with fluid and then most preferably gas in the form of air. This suspension device 10 is arranged to reset and recharge the function of the axle lift 3 in inactivated position I. In the active driving and idle position II of the vehicle 2, with said pair of wheels 4 arranged in lowered position, said shock absorber 8 is arranged to work as a normally working shock absorber and with the suspension 10 activated. Said respective shock absorber 8 is fixed between the frame 11 of the vehicle and the axle mounting arrangement 12 of said pair of wheels 4. Between the frame 11 of the vehicle and said suspension 10, a beam 13 extends, which said axle mounting arrangement 12 with wheel axle 14 is supported by. Between said beam 13 and axle mounting arrangement 12 connected therewith and said frame 11 of the vehicle, said shock absorber 8 is fixed via journal mountings 15, 16. Furthermore, actuation of the accumulator 7 and hoisting of said hoistable pair of wheels 4 is arranged to be provided either manually or electrically.

The function of the device 1 is according to the following:
Activation of said non-return valve 9 and opening of a passage 17 between the hydraulic part 18 of the gas accumulator 7 and the inner hydraulic fluid space 19 of said shock absorber 3 is arranged to actuate said pair of wheels 4 to be lifted up 20 from the ground 6 against which the pair of wheels 4 rests. In that connection, also the suspension 10 of said pair of wheels 4 is arranged to propagate via the hydraulic fluid 21 to said shock absorber 8 for the activation and lifting of said pair of wheels 4 by means of said shock absorber 8. In that connection, the vehicle 2 is driven on fewer wheels to foremost save fuel in a known way.

Deactivation of the non-return valve 9 and activation of the suspension 10 is arranged to pull apart shock absorber 8 so that this is extended, and the hydraulic fluid 21 being arranged to be pressed back to the accumulator 7 and in that connection being retained by means of the non-return valve 9. The function of the shock absorbers 8 is as usual when the vehicle 2 is driven on the road etc., 6 and with the own contained fluid 22 of the shock absorber in its separated spaces 23.

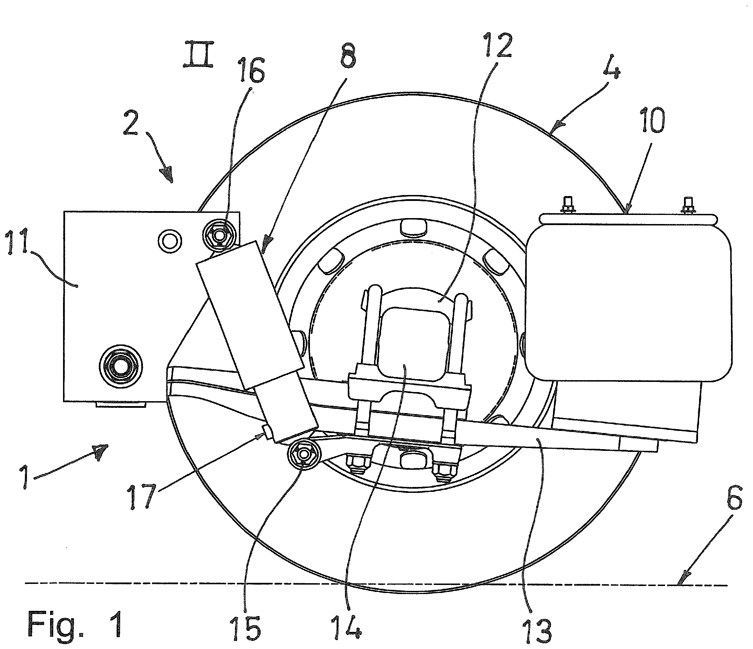

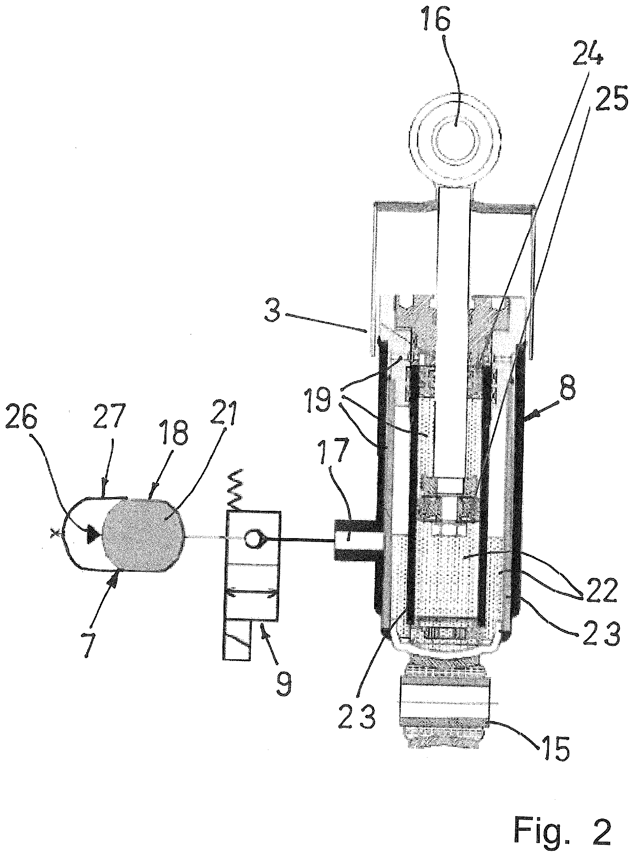

In Figs. 1 and 2, the function for the device 1 is shown in its normal position with the wheels 4 lowered against the ground 6 and the suspension 10 activated.

The lifting function 24 is deactivated and the shock absorbing function of the shock absorber 8 is not pressed by inherent lift part 25 in said cylindrical shock absorber 8.

In Figs. 3 and 4, the function for the lowering and reset of the wheels 4 is shown:
A) The non-return valve 9 is deactivated and the suspension 10 is activated, i.e., is pressurized.
B) The shock absorber 8 is pulled apart by the pressure from the suspension 10.
C) Hydraulic oil 21 is pressed back into the accumulator 7.
D) The oil 21 is retained in the accumulator 7 by means of the non-return valve 9.

In Figs. 5 and 6, the function of the device 1 is shown in connected lifting function. The non-return valve 9 is opened and the suspension 10 is deactivated by the pressure therein being released. The lift part 3 of the shock absorber 8 is activated by the accumulator pressure 26 on the pressure side 27 thereof. The shock absorber 8 is compressed because of inflowing hydraulic oil 21 in the spaces 19 therein, and thereby the wheel axle 14 and wheels 4 connected therewith are lifted in the lifting direction 28 so that the wheels 4 are hoisted to a certain distance A from the ground 6.

The function and nature of the device should have been clear by what is described above and shown in the drawings.

Naturally, the invention is not limited to the embodiment described above and shown in the accompanying drawings. Modifications are feasible, particularly as for the nature of the different parts, or by using an equivalent technique, without departing from the protection area of the invention, such as it is defined in the claims.

## Claims

1. Device (1) for a wheeled vehicle (2) which comprises an axle lift (3) to allow optional hoisting of pairs of wheels (4) provided with shock absorbers and the appurtenant axle (5) between hoisted position (I), in which said pairs of wheels (4) are supported in a lifted position freely at a distance (A) from a ground (6), and a lowered position (II), in which said pairs of wheels (4) rest against the ground (6) on which the vehicle (2) is intended to be driven, **characterized in that** the axle lift (3) is arranged to be driven by a gas accumulator (7) which, via hydraulics, is interconnected with the shock absorbers (8) of said pairs of wheels (4) in a closed system, a suspension device (10) for said pairs of wheels (4) being arranged interconnected with said pairs of wheels (4) and the frame (11) of the vehicle, and being in the form of a fluid suspension which is fillable with fluid and which said suspension device (10) is arranged to reset and recharge the function of the axle lift (3) in inactivated position and that the suspension 10 is deactivated by the pressure therein being released and the shock absorber (8) is compressed because of inflowing hydraulic oil (21) in the spaces (19) therein, and thereby the wheel axle (14) and wheels (4) connected therewith are lifted in the lifting direction (28) so that the wheels (4) are hoisted to a certain distance (A) from the ground (6) .

2. Device according to claim 1, **characterized in that** a non-return valve (9) is connected between the gas accumulator (7) and said shock absorbers (8).

3. Device according to any one of the above claims, **characterized in that**, in the active driving and idle position (II) of the vehicle (2), with said pair of wheels (4) arranged in a lowered down position and with the own contained fluid (22) of the shock absorber in its separated spaces (23), said shock absorber (8) is arranged to work as a normal shock absorber and with the suspension (10) activated.

4. Device according to any one of the above claims, **characterized in that** actuation of the accumulator (7) and hoisting of said pair of wheels (4) is arranged to be provided manually or electrically.

5. Device according to any one of the above claims, **characterized in that** said respective shock absorber (8) is fixed between the frame (11) of the vehicle and the axle mounting arrangement (12) of said pair of wheels (4).

6. Device according to claim 2, **characterized in that** activation of said non-return valve (9) and opening of a passage (17) between the hydraulic part (18) of the gas accumulator (7) and the inner hydraulic fluid space (19) of the shock absorber (8) is arranged to actuate said pair of wheels (4) to be lifted (20) up from the ground (6) against which the pair of wheels (4) rests.

7. Device according to claim 6, **characterized in that** the suspension (10) of said pair of wheels (4) is arranged to be deactivated and the pressure of the accumulator is arranged to propagate via the hydraulic fluid (21) to said shock absorber (8) for the activation and lifting of said pair of wheels (4) by means of said shock absorber (8).

8. Device according to claim 6, **characterized in that** deactivation of the non-return valve (9) and activation of the suspension (10) is arranged to pull apart the shock absorber (8), the hydraulic fluid (21) being arranged to be pressed back to the accumulator (7) and **in that** connection be retained by means of the non-return valve (9).

## Patentansprüche

1. Vorrichtung (1) für ein Radfahrzeug (2), die eine Achshubeinrichtung (3) umfasst, um ein optionales Anheben von Paaren von Rädern (4), die mit Stoßdämpfern versehen sind, und der dazugehörigen Achse (5) zwischen einer angehobenen Position (I), in der die Paare von Rädern (4) in einer hochgehobenen Position frei in einem Abstand (A) von einem Boden (6) gelagert sind, und einer abgesenkten Position (II) zu ermöglichen, in der die Paare von Rädern (4) auf dem Boden (6) aufliegen, auf dem das Fahrzeug (2) angetrieben werden soll, **dadurch gekennzeichnet, dass** die Achshubeinrichtung (3) zum Antrieb durch einen Gasspeicher (7) angeordnet ist, der hydraulisch mit den Stoßdämpfern (8) der Paare von Rädern (4) in einem geschlossenen System verbunden ist, wobei eine Aufhängungsvorrichtung (10) für die Paare von Rädern (4) mit den Paaren von Rädern (4) und dem Rahmen (11) des Fahrzeugs verbunden angeordnet ist und in Form einer mit Fluid befüllbaren Fluidaufhängung vorliegt, und wobei die Aufhängungsvorrichtung (10) angeordnet ist, um die Funktion der Achshubeinrichtung (3) in inaktivierter Position zurückzusetzen und wieder aufzuladen, und dass die Aufhängung (10) dadurch deaktiviert wird, dass der Druck darin freigegeben wird und der Stoßdämpfer (8) aufgrund des zuströmenden Hydrauliköls (21) in die Räume (19) darin komprimiert wird, und dadurch die Radachse (14) und die damit verbundenen Räder (4) in der Hubrichtung (28) hochgehoben werden, so dass die Räder (4) bis zu einer gewissen Distanz (A) von dem Boden (6) angehoben sind.

2. Vorrichtung nach Anspruch 1, **dadurch gekennzeichnet, dass** ein Rückschlagventil (9) zwischen dem Gasspeicher (7) und den Stoßdämpfern (8) verbunden ist.

3. Vorrichtung nach einem der vorhergehenden Ansprüche, **dadurch gekennzeichnet, dass** in der aktiven Fahr- und Leerlaufposition (II) des Fahrzeugs (2), in der das Paar von Rädern (4) in einer abgesenkten Position angeordnet ist, wobei sich das eigene enthaltene Fluid (22) des Stoßdämpfers in seinen separaten Räumen (23) befindet, der Stoßdämpfer (8) so angeordnet ist, dass er als ein normaler Stoßdämpfer und mit aktivierter Aufhängung (10) wirkt.

4. Vorrichtung nach einem der vorhergehenden Ansprüche, **dadurch gekennzeichnet, dass** die Betätigung des Speichers (7) und das Heben des Paares von Rädern (4) so vorgesehen sind, dass sie manuell oder elektrisch erfolgen.

5. Vorrichtung nach einem der vorhergehenden Ansprüche, **dadurch gekennzeichnet, dass** der jeweilige Stoßdämpfer (8) zwischen dem Rahmen (11) des Fahrzeugs und der Achsmontageanordnung (12) des Paares von Rädern (4) befestigt ist.

6. Vorrichtung nach Anspruch 2, **dadurch gekennzeichnet, dass** die Aktivierung des Rückschlagventils (9) und das Öffnen eines Durchgangs (17) zwischen dem Hydraulikteil (18) des Gasspeichers (7) und dem inneren Hydraulikfluidraum (19) des Stoßdämpfers (8) so vorgesehen sind, das Paar von Rädern (4) so zu betätigen, dass es von dem Boden (6), auf dem das Paar von Rädern (4) aufliegt, angehoben (20) wird.

7. Vorrichtung nach Anspruch 6, **dadurch gekennzeichnet, dass** die Aufhängung (10) des Paares von Rädern (4) zum Deaktivieren vorgesehen ist und der Druck des Speichers so vorgesehen ist, dass er sich über das Hydraulikfluid (21) zu dem Stoßdämpfer (8) zum Aktivieren und Anheben des Paares von Rädern (4) mittels des Stoßdämpfers (8) ausbreitet.

8. Vorrichtung nach Anspruch 6, **dadurch gekennzeichnet, dass** die Deaktivierung des Rückschlagventils (9) und die Aktivierung der Aufhängung (10) so vorgesehen sind, dass sie den Stoßdämpfer (8) auseinanderziehen, wobei das Hydraulikfluid (21) so angeordnet ist, dass es zurück in den Speicher (7) gedrückt und in dieser Verbindung mittels des Rückschlagventils (9) zurückgehalten wird.

## Revendications

1. Dispositif (1) pour un véhicule à roues (2) qui comprend un dispositif de levage d'essieu (3) pour permettre le soulèvement optionnel de paires de roues (4) dotées d'amortisseurs de chocs et de l'essieu associé (5) entre une position soulevée (I), dans laquelle lesdites paires de roues (4) sont supportées dans une position levée librement à une distance (A) d'un sol (6), et une position baissée (II), dans laquelle lesdites paires de roues (4) reposent contre le sol (6) sur lequel le véhicule (2) est destiné à être conduit, **caractérisé en ce que** le dispositif de levage d'essieu (3) est prévu pour être entraîné par un accumulateur de gaz (7) qui, par le biais de l'hydraulique, est interconnecté avec les amortisseurs de chocs (8) desdites paires de roues (4) dans un système fermé, un dispositif de suspension (10) pour lesdites paires de roues (4) étant prévu interconnecté avec lesdites paires de roues (4) et le châssis (11) du véhicule, et étant sous la forme d'une suspension à fluide qui peut être chargée de fluide et lequel dit dispositif de suspension (10) est prévu pour réinitialiser et recharger la fonction du dispositif de levage d'essieu (3) en position inactivée et **en ce que** la suspension 10 est désactivée par la pression à l'intérieur de celle-ci étant relâchée et l'amortisseur de chocs (8) est comprimé en raison de l'afflux d'huile hydraulique (21) dans les espaces (19) à l'intérieur de celui-ci, et ainsi l'essieu de roue (14) et les roues (4) connectées à celui-ci sont levés dans la direction de levage (28) de sorte que les roues (4) sont soulevées à une certaine distance (A) du sol (6).

2. Dispositif selon la revendication 1, **caractérisé en ce qu'**un clapet anti-retour (9) est connecté entre l'accumulateur de gaz (7) et lesdits amortisseurs de chocs (8).

3. Dispositif selon l'une quelconque des revendications précédentes, **caractérisé en ce que**, dans la position de conduite active et de ralenti (II) du véhicule (2), avec ladite paire de roues (4) prévue dans une position abaissée et avec le propre fluide contenu (22) de l'amortisseur de chocs dans ses espaces séparés (23), ledit amortisseur de chocs (8) est prévu pour fonctionner comme un amortisseur de chocs normal et avec la suspension (10) activée.

4. Dispositif selon l'une quelconque des revendications précédentes, **caractérisé en ce que** l'actionnement de l'accumulateur (7) et le soulèvement de ladite paire de roues (4) est prévu pour être fourni manuellement ou électriquement.

5. Dispositif selon l'une quelconque des revendications précédentes, **caractérisé en ce que** ledit amortisseur de chocs (8) respectif est fixé entre le châssis (11) du véhicule et l'agencement de montage d'essieu (12) de ladite paire de roues (4).

6. Dispositif selon la revendication 2, **caractérisé en ce que** l'activation dudit clapet anti-retour (9) et l'ouverture d'un passage (17) entre la partie hydraulique (18) de l'accumulateur de gaz (7) et l'espace de fluide hydraulique interne (19) de l'amortisseur de chocs (8) est prévue pour actionner ladite paire de roues (4) devant être soulevée (20) du sol (6) contre lequel la paire de roues (4) repose.

7. Dispositif selon la revendication 6, **caractérisé en ce que** la suspension (10) de ladite paire de roues (4) est prévue pour être désactivée et la pression de l'accumulateur est prévue pour se propager par le biais du fluide hydraulique (21) jusqu'audit amortisseur de chocs (8) pour l'activation et le levage de ladite paire de roues (4) au moyen dudit amortisseur de chocs (8).

8. Dispositif selon la revendication 6, **caractérisé en ce que** la désactivation du clapet anti-retour (9) et l'activation de la suspension (10) est prévue pour écarter l'amortisseur de chocs (8), le fluide hydraulique (21) étant prévu pour être refoulé vers l'accumulateur (7) et **en ce que** la connexion est conservée au moyen du clapet anti-retour (9).
